# EUROPEAN PATENT APPLICATION

(11) **EP 4 123 647 A1**
(43) Date of publication of application: **25.01.2023**
(21) Application number: 20925353.3
(22) Date of filing: 19.03.2020
(51) Int. Cl.: G10L 25/63

(54) **VOICE EVALUATION SYSTEM, VOICE EVALUATION METHOD, AND COMPUTER PROGRAM**

(71) Applicant: NEC Corporation, 108-8001 Tokyo (JP)
(72) Inventor: KODA, Yoshinori, Tokyo 108-8001 (JP)
(74) Representative: Betten & Resch
(86) International application number: PCT/JP2020/012381
(87) International publication number: WO 2021/186691

(57) **Abstract**

A voice evaluation system includes: an acquisition unit that obtains voice uttered by a group of a plurality of persons; a detection unit that detects an element corresponding to a feeling from the obtained voice; and an evaluation unit that evaluates the obtained voice on the basis of the detected element. According to such a voice evaluation system, it is possible to properly evaluate the voice uttered by the group. For example, it is possible to properly evaluate the feelings as a whole group by using the voice of the group.

## Description

### Technical Field

This disclosure relates to a voice evaluation system, a voice evaluation method, and a computer program that evaluate voice.

### [Background Art]

A known system of this type is a system that obtains uttered voice and estimates a speaker's feeling. For example, Patent Literature 1 discloses a technique/technology of quantitatively analyzing a feeling of anger and a feeling of embarrassment from a customer's voice who calls a call center. Patent Literature 2 discloses a technique/technology of classifying the feelings into "laugh," "anger," "sadness," and the like, by using a parameter of a voice feature amount extracted from input voice data. Patent Literature 3 discloses a technique/technology of outputting a quantitative index obtained by converting the feelings such as joy, anger, satisfaction, stress, and reliability, into numerals by using interactive voice data as an input.

### Citation List

### Patent Literature

Patent Literature 1: JP2007-004001A
Patent Literature 2: JP2005-354519A
Patent Literature 3: JP Patent No. 6517419

### Summary

### Technical Problem

In each of the Patent Literatures described above, mainly one-to-one conversation is intended to be a target, and evaluation about voice uttered by a group is not considered.

It is an example object of this disclosure to provide a voice evaluation system, a voice evaluation method, and a computer program for solving the problems described above.

### Solution to Problem

A voice evaluation system according to an example aspect of this disclosure includes: an acquisition unit that obtains voice uttered by a group of a plurality of persons; a detection unit that detects an element corresponding to a feeling from the obtained voice; and an evaluation unit that evaluates the obtained voice on the basis of the detected element.

A voice evaluation method according to an example aspect of this disclosure includes: obtaining voice uttered by a group of a plurality of persons; detecting an element corresponding to a feeling from the obtained voice; and evaluating the obtained voice on the basis of the detected element.

A computer program according to an example aspect of this disclosure operates a computer: to obtain voice uttered by a group of a plurality of persons; to detect an element corresponding to a feeling from the obtained voice; and to evaluate the obtained voice on the basis of the detected element.

### Brief Description of Drawings

[FIG. 1] FIG. 1 is a block diagram illustrating an overall configuration of a voice evaluation system according to a first example embodiment.
[FIG. 2] FIG. 2 is a block diagram illustrating a hardware configuration of the voice evaluation system according to the first example embodiment.
[FIG. 3] FIG. 3 is a flowchart illustrating a flow of operation of the voice evaluation system according to the first example embodiment.
[FIG. 4] FIG. 4 is a block diagram illustrating an overall configuration of a voice evaluation system according to a second example embodiment.
[FIG. 5] FIG. 5 is a flowchart illustrating a flow of operation of the voice evaluation system according to the second example embodiment.
[FIG. 6] FIG. 6 is a block diagram illustrating an overall configuration of a voice evaluation system according to a third example embodiment.
[FIG. 7] FIG. 7 is a flowchart illustrating a flow of operation of the voice evaluation system according to the third example embodiment.
[FIG. 8] FIG. 8 is a block diagram illustrating an overall configuration of a voice evaluation system according to a fourth example embodiment.
[FIG. 9] FIG. 9 is a flowchart illustrating a flow of operation of the voice evaluation system according to the fourth example embodiment.
[FIG. 10] FIG. 10 is version 1 of a diagram illustrating a display example of evaluation data according to a fifth example embodiment.
[FIG. 11] FIG. 11 is version 2 of a diagram illustrating a display example of the evaluation data according to the fifth example embodiment.
[FIG. 12] FIG. 12 is version 3 of a diagram illustrating a display example of the evaluation data according to the fifth example embodiment.
[FIG. 13] FIG. 13 is version 4 of a diagram illustrating a display example of the evaluation data according to the fifth example embodiment.
[FIG. 14] FIG. 14 is version 5 of a diagram illustrating a display example of the evaluation data according to the fifth example embodiment.
[FIG. 15] FIG. 15 is a block diagram illustrating an overall configuration of a voice evaluation system according to a sixth example embodiment.
[FIG. 16] FIG. 16 is a flowchart illustrating a flow of operation of the voice evaluation system according to the sixth example embodiment.
[FIG. 17] FIG. 17 is a conceptual diagram illustrating voice evaluation in each area by a voice evaluation system according to a seventh example embodiment.

### Description of Example Embodiments

Hereinafter, a voice evaluation system, a voice evaluation method, and a computer program according to example embodiments will be described with reference to the drawings.

### <First Example Embodiment>

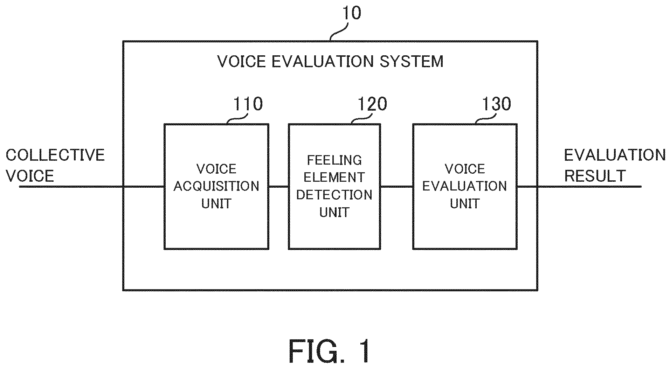

A voice evaluation system according to a first example embodiment will be described with reference to FIG. 1 to FIG. 3.

### (System Configuration)

First, with reference to FIG. 1, a description will be given to an overall configuration of the voice evaluation system according to the first example embodiment. FIG. 1 is a block diagram illustrating the overall configuration of the voice evaluation system according to the first example embodiment.

In FIG. 1, a voice evaluation system 10 according to the first example embodiment is configured as a system that is configured to evaluate voice uttered by a group. The "group" herein is a gathering of people including a plurality of persons, and specifically, an example of the group includes an audience of various events, such as the stage and sports watching. The voice evaluation system 10 includes, as functional blocks for realizing its function, a voice acquisition unit 110, a feeling element detection unit 120, and a voice evaluation unit 130.

The voice acquisition unit 110 is configured to obtain voice uttered by the group (hereinafter referred to as "collective voice" as appropriate). The voice acquisition unit 110 includes, for example, a microphone located where a group is formed. The voice acquisition unit 110 may be configured to perform various processes for the obtained voice (e.g., a noise cancellation process, a process of extracting a particular section, etc.). The collective voice obtained by the voice acquisition unit 110 is configured to be outputted to the feeling element detection unit 120.

The feeling element detection unit 120 is configured to detect a feeling element from the collective voice obtained by the voice acquisition unit 110. The "feeling element" herein is an element indicating a feeling of the group included in the voice, and an example of the feeling element includes, for example, an element corresponding to a feeling of "joy," an element corresponding to a feeling of "anger," and an element corresponding to a feeling of "sadness" or the like. The feeling element detection unit 120 is configured to detect at least one type of feeling element set in advance. The existing technology can be adopted for a method of detecting the feeling element from voice as appropriate. For example, it is possible to use a method that uses frequency analysis of the voice, a method that uses deep learning, or the like. Information about the feeling element detected by the feeling element detection unit 120 is configured to be outputted to the voice evaluation unit 130.

The voice evaluation unit 130 is configured to evaluate the collective voice on the basis of the feeling element detected by the feeling element detection unit 120. Specifically, the voice evaluation unit 130 is configured to evaluate a degree of the feeling of the group from the feeling element detected from the collective voice. The voice evaluation unit 130 evaluates the collective voice, for example, by converting the feeling element into numerals. For example, when the element corresponding to the feeling of "joy" is detected, the voice evaluation unit 130 calculates a score corresponding to the feeling of "joy" of the group and makes an evaluation. Specifically, when the collective voice mainly includes the element corresponding to the feeling of "joy", the score corresponding to the feeling of "joy" may be calculated as a high value. On the other hand, when the collective voice does not mainly include the element corresponding to the feeling of "joy", the score corresponding to the feeling of "joy" may be calculated as a low value.

### (Hardware Configuration)

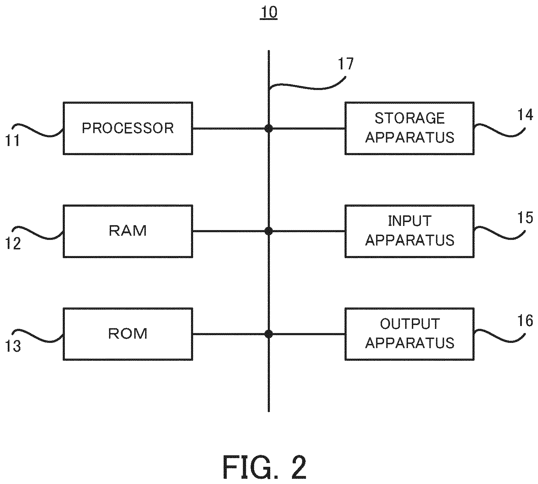

Next, with reference to FIG. 2, a hardware configuration of the voice evaluation system 10 according to the first example embodiment. FIG. 2 is a block diagram illustrating a hardware configuration of the voice evaluation system according to the first example embodiment.

As illustrated in FIG. 2, the voice evaluation system 10 according to the first example embodiment includes a processor 11, a RAM (Random Access Memory) 12, a ROM (Read Only Memory) 13, and a storage apparatus 14. The voice evaluation system 10 may further include an input apparatus 15 and an output apparatus 16. The processor 11, the RAM 12, the ROM 13, the storage apparatus 14, the input apparatus 15, and the output apparatus 16 are connected through a data bus 17. The voice evaluation system 10 may include a plurality of processors 11, a plurality of RAMs 12, a plurality of ROMs 13, a plurality of storage apparatuses 14, a plurality of input apparatuses 15, and a plurality of output apparatuses 16.

The processor 11 reads a computer program. For example, the processor 11 is configured to read a computer program stored in at least one of the RAM 12, the ROM 13 and the storage apparatus 14. Alternatively, the processor 11 may read a computer program stored by a computer readable recording medium by using a not-illustrated recording medium reading apparatus. The processor 11 may obtain (i.e., read) a computer program from a not-illustrated apparatus that is located outside the voice evaluation system 10 through a network interface. The processor 11 controls the RAM 12, the storage apparatus 14, the input apparatus 15, and the output apparatus 16 by executing the read computer program. Especially in the first example embodiment, when the computer program read by the processor 11 is executed, a functional block for evaluating the obtained voice is implemented in the processor 11 (see FIG. 1). As the processor 11, any one of a CPU (Central Processing Unit), a GPU (Graphics Processing Unit), a FPGA(field-programmable gate array), a DSP (digital signal processor), and an ASIC(application specific integrated circuit) may be used. Furthermore, a plurality of those may be used in parallel.

The RAM 12 temporarily stores the computer program to be executed by the processor 11. The RAM 12 temporarily stores the data that is temporarily used by the processor 11 when the processor 11 executes the computer program. The RAM 12 may be, for example, a D-RAM (Dynamic RAM).

The ROM 13 stores the computer program to be executed by the processor 11. The ROM 13 may otherwise store fixed data. The ROM 13 may be, for example, a P-ROM (Programmable ROM).

The storage apparatus 14 stores the data that is stored for a long term by the voice evaluation system 10. The storage apparatus 14 may operate as a temporary storage apparatus of the processor 11. The storage apparatus 14 may include, for example, at least one of a hard disk apparatus, a magneto-optical disk apparatus, an SSD (Solid State Drive), and a disk array apparatus.

The input apparatus 15 is an apparatus that receives an input instruction from a user of the voice evaluation system 10. The input apparatus 15 may include, for example, at least one of a keyboard, a mouse, and a touch panel.

The output apparatus 16 is an apparatus that outputs information about the voice evaluation system 10 to the outside. For example, the output apparatus 16 may be a display apparatus (e.g., a display) that is configured to display the information about the voice evaluation system 10.

### (Flow of Operation)

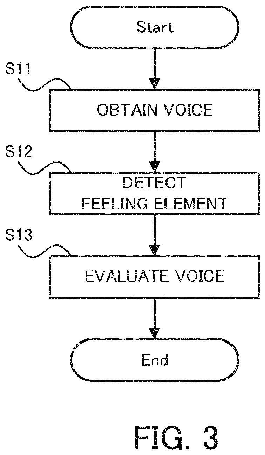

Next, with reference to FIG.3, a description will be given to a flow of operation of the voice evaluation system 10 according to the first example embodiment. FIG. 3 is a flowchart illustrating the flow of the operation of the voice evaluation system according to the first example embodiment.

As illustrated in FIG. 3, in operation of the voice evaluation system 10 according to the first example embodiment, first, the voice acquisition unit 110 obtains the collective voice (step S11). The voice acquisition unit 110 may obtain voice all the time, or may obtain it only in a predetermined period. Alternatively, the voice acquisition unit 110 may perform a process of obtaining the voice all the time and extracting only the voice for a predetermined period.

Subsequently, the feeling element detection unit 120 detects the feeling element from the collective voice obtained by the voice acquisition unit 110 (step S12). Then, the voice evaluation unit 130 evaluates the collective voice on the basis of the feeling element detected by the feeling element detection unit 120 (step S13). A result of the evaluation by the voice evaluation unit 130 may be outputted, for example, to a not-illustrated display apparatus.

### (Technical Effect)

Next, an example of a technical effect obtained by the voice evaluation system 10 according to the first example embodiment will be described.

For example, in venues of various events such as the stage and sports watching, the voice uttered by the group (e.g., a cheer, a scream, etc.) varies depending on excitement. Therefore, if such voice can be properly evaluated, to what extent an event is accepted by visitors can be supposedly determined.

As described in FIG. 1 to FIG. 3, in the voice evaluation system 10 according to the first example embodiment, an evaluation is made by detecting the feeling element from collective voice uttered by the group.
Therefore, according to the voice evaluation system 10 in the first example embodiment, it is possible to properly evaluate the feeling of the group by using the collective voice. For example, in the voice evaluation system 10 according to the first example embodiment, in an event that attracts a large audience or the like, it is possible to make an evaluation, by converting the excitement of the audience or the like into numerals, from the voice. It is therefore possible to objectively evaluate whether or not the event is successful.

Since the voice evaluation system 10 according to the first example embodiment evaluates the collective voice uttered by the group, it is possible to properly evaluate the feeling as a whole group, for example, even in a situation where it is difficult to obtain the voice from each person. Moreover, since an evaluation can be made only by the voice without using a face image or the like, it is possible to properly evaluate the feeling of the group even in poor illumination.

### <Second Example Embodiment>

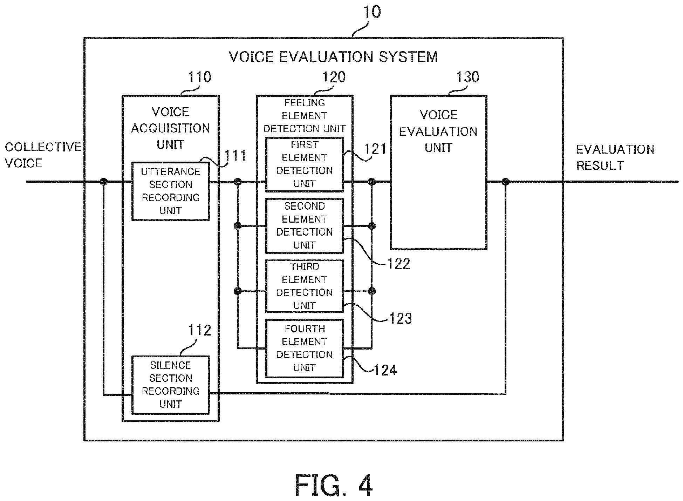

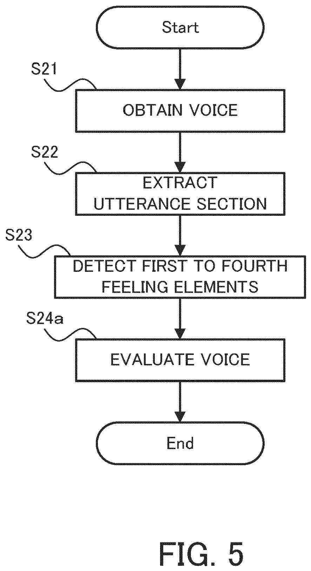

A voice evaluation system according to a second example embodiment will be described with reference to FIG. 4 and FIG. 5. The second example embodiment is partially different from the first example embodiment described above only in configuration and operation, and is generally the same in the other part. Therefore, the parts that differ from the first example embodiment will be described in detail below, and the other overlapping parts will not be described as appropriate.

### (System Configuration)

First, with reference to FIG. 4, a description will be given to an overall configuration of the voice evaluation system according to the second example embodiment. FIG. 4 is a block diagram illustrating the overall configuration of the voice evaluation system according to the second example embodiment. In FIG. 4, the same components as those illustrated in FIG. 1 carry the same reference numerals.

As illustrated in FIG. 4, in the voice evaluation system 10 according to the second example embodiment, the voice acquisition unit 110 includes an utterance section recording unit 111 and a silence section recording unit 112. The feeling element detection unit 120 includes a first element detection unit 121, a second element detection unit 122, a third element detection unit 123, and a fourth element detection unit 124.

The utterance section recording unit 111 records the voice obtained in a section in which the group utters the voice. The voice recorded by the utterance section recording unit 111 is configured to be outputted to the feeling element detection unit 120. On the other hand, the silence section recording unit 112 records a section in which the group does not utter the voice (e.g., a section in which a volume is less than or equal to a predetermined threshold). The section recorded by the silence section recording unit 112 is not outputted to the feeling element detection unit 120, but is directly outputted to an evaluation data generation unit 140 (in other words, it is out of an evaluation target). In this way, it is possible to reduce a processing load of the system by limiting the section for voice evaluation.

The first element detection unit 121, the second element detection unit 122, the third element detection unit 123, and the fourth element detection unit 124 are configured to detect respective different feeling elements. For example, the first element detection unit 121 may detect the feeling element corresponding to the feeling of "joy". The second element detection unit 122 may detect the feeling element corresponding to the feeling of "anger". The third element detection unit 123 may detect the feeling element corresponding to the feeling of "sadness". The fourth element detection unit 124 may detect a feeling element corresponding to a feeling of "pleasure".

### (Hardware Configuration)

A hardware configuration of the voice evaluation system 10 according to the second example embodiment may be the same as the hardware configuration of the voice evaluation system 10 according to the first example embodiment (see FIG. 2), and thus, a description thereof will be omitted.

### (Flow of Operation)

Next, with reference to FIG. 5, a description will be given to a flow of operation of the voice evaluation system 10 according to the second example embodiment. FIG. 5 is a flowchart illustrating the flow of the operation of the voice evaluation system according to the second example embodiment.

As illustrated in FIG. 5, in operation of the voice evaluation system 10 according to the second example embodiment, first, the voice acquisition unit 110 obtains the collective voice (step S21). The voice acquisition unit 110 also extracts the voice in the section in which the group actually utters the voice, from the obtained voice (step S22). Specifically, the utterance section recording unit 111 records the voice in the section in which the group utters the voice, and the silence section recording unit 112 records the section in which the group does not utter the voice.

Subsequently, the feeling element detection unit 120 detects the feeling elements from the collective voice obtained by the voice acquisition unit 110 (step S23). Specifically, the first element detection unit 121, the second element detection unit 122, the third element detection unit 123, and the fourth element detection unit 124 detect the respective feeling elements corresponding to different feelings.

The respective feeling elements detected by the first element detection unit 121, the second element detection unit 122, the third element detection unit 123, and the fourth element detection unit 124 are inputted to the voice evaluation unit 130. Then, the voice evaluation unit 130 evaluates the collective voice on the basis of the feeling elements detected by the feeling element detection unit 120 (step S24a).

### (Technical Effect)

Next, an example of a technical effect obtained by the voice evaluation system 10 according to the second example embodiment will be described.

As described in FIG. 4 and FIG. 5, in the voice evaluation system 10 according to the second example embodiment, the feeling element detection unit 120 includes the first element detection unit 121, the second element detection unit 122, the third element detection unit 123, and the fourth element detection unit 124. It is therefore possible to extract a plurality of types of feeling elements from the voice obtained by the voice acquisition unit 110. This makes it possible to realize voice evaluation corresponding to the type of the feeling.

### <Third Example Embodiment>

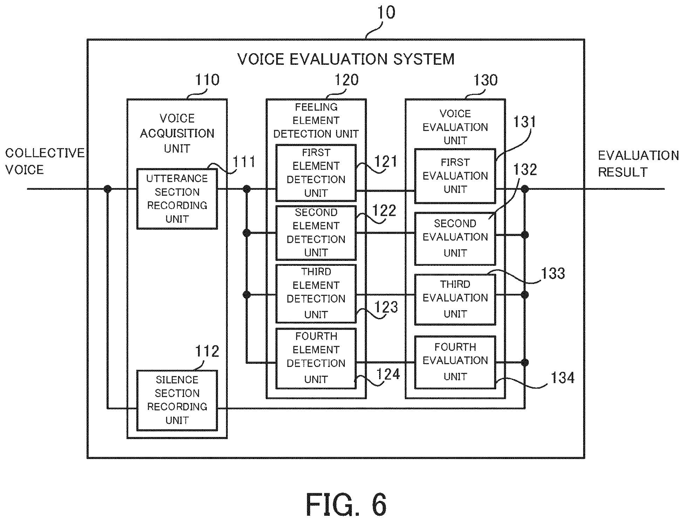

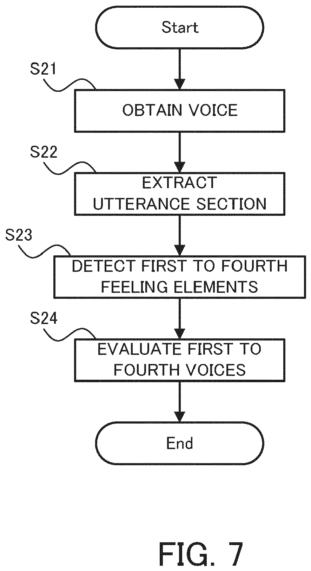

A voice evaluation system according to a third example embodiment will be described with reference to FIG. 6 and FIG. 7. The third example embodiment is partially different from the first and second example embodiments described above only in configuration and operation, and is generally the same in the other part. Therefore, the parts that differ from the first and second example embodiments will be described in detail below, and the other overlapping parts will not be described as appropriate.

### (System Configuration)

First, with reference to FIG. 6, a description will be given to an overall configuration of the voice evaluation system according to the third example embodiment. FIG. 6 is a block diagram illustrating the overall configuration of the voice evaluation system according to the third example embodiment. In FIG. 4, the same components as those illustrated in FIG. 1 and FIG. 4 carry the same reference numerals.

As illustrated in FIG. 6, in the voice evaluation system 10 according to the third example embodiment, the voice evaluation unit 130 includes a first evaluation unit 131, a second evaluation unit 132, a third evaluation unit 133, and a fourth evaluation unit 134.

The first evaluation unit 131 is configured to evaluate the voice on the basis of the feeling element detected by the first element detection unit 121. The second evaluation unit 132 is configured to evaluate the voice on the basis of the feeling element detected by the second element detection unit 122. The third evaluation unit 133 is configured to evaluate the voice on the basis of the feeling element detected by the third element detection unit 123. The fourth evaluation unit 134 is configured to evaluate the voice on the basis of the feeling element detected by the fourth element detection unit 124.

### (Hardware Configuration)

A hardware configuration of the voice evaluation system 10 according to the third example embodiment may be the same as the hardware configuration of the voice evaluation system 10 according to the first example embodiment (see FIG. 2), and thus, a description thereof will be omitted.

### (Flow of Operation)

Next, with reference to FIG.7, a description will be given to a flow of operation of the voice evaluation system 10 according to the third example embodiment. FIG. 7 is a flowchart illustrating the flow of the operation of the voice evaluation system according to the third example embodiment.

As illustrated in FIG. 7, in operation of the voice evaluation system 10 according to the third example embodiment, first, the voice acquisition unit 110 obtains the collective voice (the step S21). The voice acquisition unit 110 extracts the voice in the section in which the group actually utters the voice, from the obtained voice (the step S22).

Subsequently, the feeling element detection unit 120 detects the feeling elements, from the collective voice obtained by the voice acquisition unit 110 (the step S23). Specifically, the first element detection unit 121, the second element detection unit 122, the third element detection unit 123, and the fourth element detection unit 124 detect the respective feeling elements corresponding to different feelings. The respective feeling elements detected by the first element detection unit 121, the second element detection unit 122, the third element detection unit 123, and the fourth element detection unit 124 are inputted to the voice evaluation unit 130.

Subsequently, the voice evaluation unit 130 evaluates the collective voice on the basis of the feeling elements detected by the feeling element detection unit 120 (step S24). Specifically, the first evaluation unit 131, the second evaluation unit 132, the third evaluation unit 133, and the fourth evaluation unit 134 separately make evaluations on the basis of the feeling elements detected by the first element detection unit 121, the second element detection unit 122, the third element detection unit 123, and the fourth element detection unit 124, respectively.

### (Technical Effect)

Next, an example of a technical effect obtained by the voice evaluation system 10 according to the third example embodiment will be described.

As described in FIG. 6 and FIG. 7, in the voice evaluation system 10 according to the third example embodiment, the voice evaluation unit 130 includes the first evaluation unit 131, the second evaluation unit 132, the third evaluation unit 133, and the fourth evaluation unit 134. It is thus possible to separately perform the voice evaluation for each of the plurality of types of feeling elements detected by the first element detection unit 121, the second element detection unit 122, the third element detection unit 123, and the fourth element detection unit 124.

### <Fourth Example Embodiment>

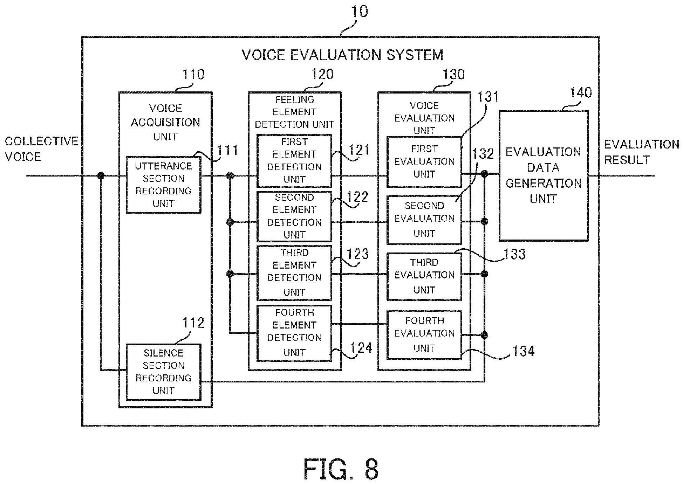

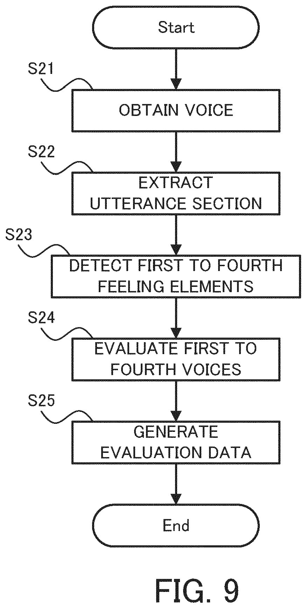

A voice evaluation system according to a fourth example embodiment will be described with reference to FIG. 8 and FIG. 9. The fourth example embodiment is partially different from the first to third example embodiments described above only in configuration and operation, and is generally the same in the other part. Therefore, the parts that differ from the first to third example embodiments will be described in detail below, and the other overlapping parts will not be described as appropriate.

### (System Configuration)

First, with reference to FIG. 8, a description will be given to an overall configuration of the voice evaluation system according to the fourth example embodiment. FIG. 8 is a block diagram illustrating the overall configuration of the voice evaluation system according to the fourth example embodiment. In FIG. 8, the same components as those illustrated in FIG. 1, FIG. 4, and FIG. 6 carry the same reference numerals.

As illustrated in FIG. 8, the voice evaluation system 10 according to the fourth example embodiment may include an evaluation data generation unit 140 in addition to the components in the third example embodiment (see FIG. 6). The voice evaluation system 10 according to the fourth example embodiment may include the evaluation data generation unit 140 in addition to the components in the first example embodiment (see FIG. 1). Alternatively, the voice evaluation system 10 according to the fourth example embodiment may include the evaluation data generation unit 140 in addition to the components in the second example embodiment (see FIG. 4).

The evaluation data generation unit 140 is configured to generate evaluation data by integrating evaluation results of the first evaluation unit 131, the second evaluation unit 132, the third evaluation unit 133, and the fourth evaluation unit 134 with information about the section stored in the silence section recording unit 112. The evaluation data are generated as data for the user of the voice evaluation system 10 to properly understand the evaluation results. A specific example of the evaluation data will be described in detail later in a fifth example embodiment.

### (Hardware Configuration)

A hardware configuration of the voice evaluation system 10 according to the fourth example embodiment may be the same as the hardware configuration of the voice evaluation system 10 according to the first example embodiment (see FIG. 2), and thus, a description thereof will be omitted. The evaluation data generation unit 140 may be implemented, for example, by the processor 11 (see FIG. 2).

### (Flow of Operation)

Next, with reference to FIG.9, a description will be given to a flow of operation of the voice evaluation system 10 according to the fourth example embodiment. FIG. 9 is a flowchart illustrating the flow of the operation of the voice evaluation system according to the fourth example embodiment.

As illustrated in FIG. 9, in operation of the voice evaluation system 10 according to the fourth example embodiment, first, the voice acquisition unit 110 obtains the collective voice (the step S21). The voice acquisition unit 110 extracts the voice in the section in which the group actually utters the voice, from the obtained voice (step S22).

Subsequently, the feeling element detection unit 120 detects the feeling elements from the collective voice obtained by the voice acquisition unit 110 (the step S23). Specifically, the first element detection unit 121, the second element detection unit 122, the third element detection unit 123, and the fourth element detection unit 124 detect the respective feeling elements corresponding to different feelings. Then, the voice evaluation unit 130 evaluates the collective voice on the basis of the feeling elements detected by the feeling element detection unit 120 (the step S24). Specifically, the first evaluation unit 131, the second evaluation unit 132, the third evaluation unit 133, and the fourth evaluation unit 134 evaluate the collective voice by using the respective different feeling elements.

Subsequently, the evaluation data generation unit 140 generates the evaluation data from the evaluation result of the collective voice (step S25). The evaluation data generated by the evaluation data generation unit 140 may be outputted, for example, to a not-illustrated display apparatus or the like.

### (Technical Effect)

Next, an example of a technical effect obtained by the voice evaluation system 10 according to the fourth example embodiment will be described.

As described in FIG. 8 and FIG. 9, in the voice evaluation system 10 according to the fourth example embodiment, the evaluation data are generated by the evaluation data generation unit 140. Therefore, it is possible to properly understand the evaluation result of the collective voice by using the evaluation data.

### <Fifth Example Embodiment>

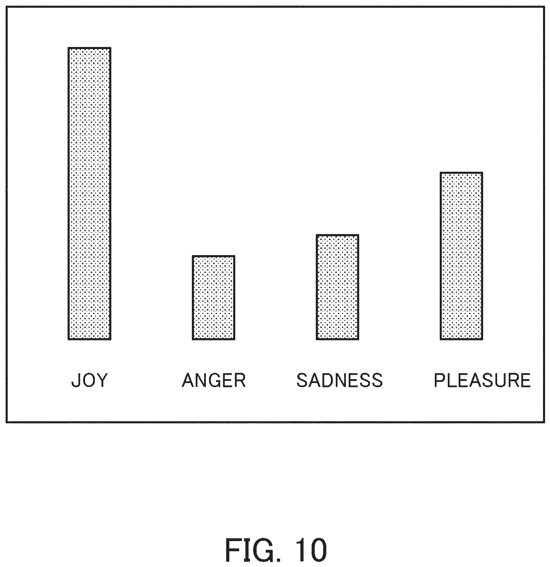

Next, the voice evaluation stem 10 according to a fifth example embodiment will be described with reference to FIG. 10 to FIG. 14. The fifth example embodiment shows specific examples of the evaluation data generated by the evaluation data generation unit 140 according to the fourth example embodiment described above. A system configuration, a hardware configuration, and a flow of operation may be the same as those in the fourth example embodiment, and thus, a detailed description thereof will be omitted.

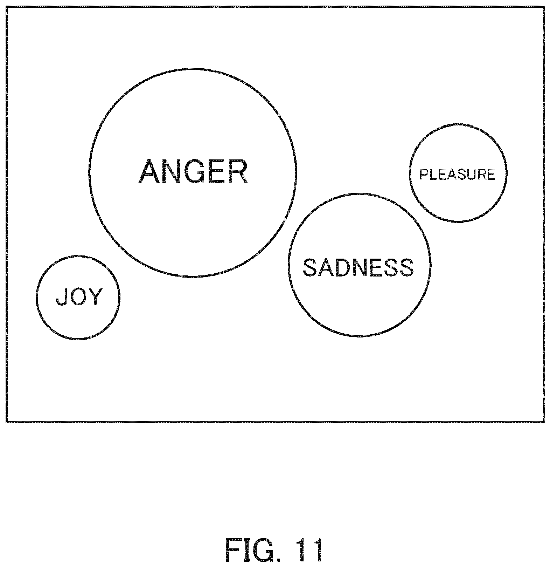

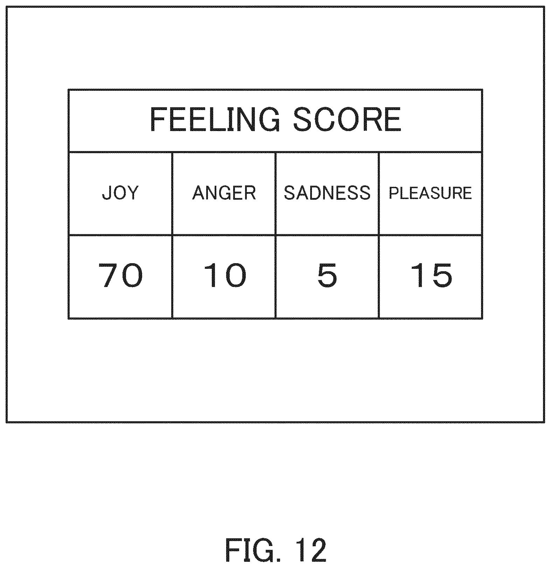

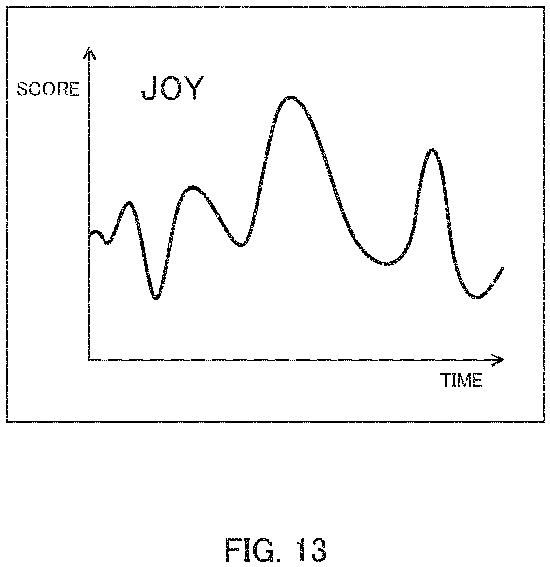

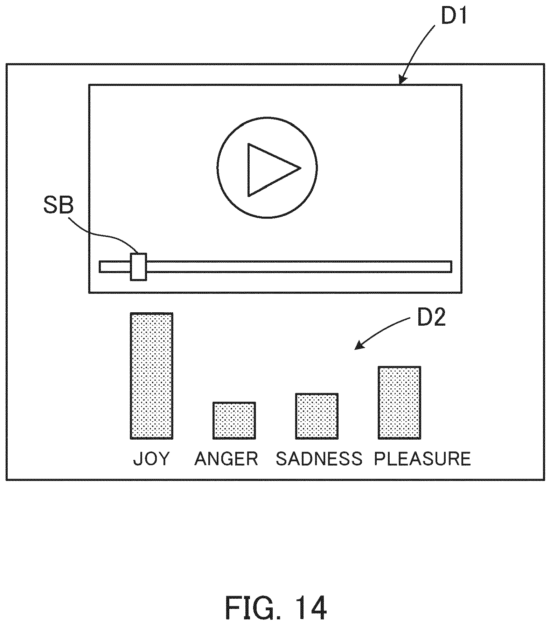

With reference to FIG. 10 to FIG. 14, specific examples of the evaluation data generated by the evaluation data generation unit 140 will be described. FIG. 10 is version 1 of a diagram illustrating a display example of the evaluation data according to a fifth example embodiment. FIG. 11 is version 2 of a diagram illustrating a display example of the evaluation data according to the fifth example embodiment. FIG. 12 is version 3 of a diagram illustrating a display example of the evaluation data according to the fifth example embodiment. FIG. 13 is version 4 of a diagram illustrating a display example of the evaluation data according to the fifth example embodiment. FIG. 14 is version 5 of a diagram illustrating a display example of the evaluation data according to the fifth example embodiment. In the following, a description will be given to an example in which the voice evaluation system 10 evaluates four types of feelings of "joy", "anger", "sadness", and "pleasure".

As illustrated in FIG. 10, the evaluation data may be represented by a bar graph illustrating the extent of each feeling. In the example illustrated in FIG. 10, it is intuitively apparent that the feeling of "joy" is the most, and that the feelings of "anger," "pity," and "pleasure" are less than the feeling of "joy".

As illustrated in FIG. 11, the evaluation data may be represented by a circle whose size indicates the extent of each feeling. In the example illustrated in FIG. 11, it is intuitively apparent that the feeling of "anger" is the most, and that the feelings of "joy", "sadness", and "pleasure" are less than the feeling of "joy".

As illustrated in FIG. 12, the evaluation data may be represented by a table on which the extent of each feeling is converted into a numeral. In the example illustrated in FIG. 12, the feeling of "joy" is "70," the feeling of "anger" is "10," the feeling of "sadness" is "5," and the feeling of "pleasure" is "15." It is thus possible to more accurately understand the extent of each feeling.

As illustrated in FIG. 13, the evaluation data may be represented by a change in the extent of each feeling on a time axis (in other words, time series data). In the example illustrated in FIG. 13, it is possible to concretely understand how the feeling of "joy" changes with time. According to such evaluation data, it is possible to accurately understand the timing of the excitement of an event, or the like. Although only a graph corresponding to the feeling of "joy" is illustrated here, it is also possible to switch to a graph corresponding to another feeling, to display a list including the graph corresponding to another feeling, or to perform similar actions.

As illustrated in FIG. 14, the evaluation data may be generated as data including a video area D1 for displaying a video and a graph area D2 for displaying a graph illustrating the extent of each feeling. In the video area D1, a video that captures the event can be reproduced, and it is possible to move to a desired timing by operating a seek bar SB. On the other hand, in the graph area D2, the extent of each feeling according to the timing of the reproduction of the video displayed in the moving image area D1 is illustrated in a bar graph. In this way, it is possible to understand how the feelings of the group have actually changed in what situation.

It is also possible to combine and use the respective display examples described above as appropriate. Furthermore, the display examples of the evaluation data described above are merely examples, and the evaluation data may be displayed in another display aspect.

### (Technical Effect)

Next, an example of a technical effect obtained by the voice evaluation system 10 according to the fifth example embodiment will be described.

As described in FIG. 10 to FIG. 14, in the voice evaluation system 10 according to the fifth example embodiment, the evaluation data indicating the evaluation result of the collective voice in an easy-to-understand manner are generated. Therefore, according to the voice evaluation system 10 in the fifth example embodiment, it is possible to understand the evaluation result of the collective voice, properly (e.g., more intuitively or more accurately).

### <Sixth Example Embodiment>

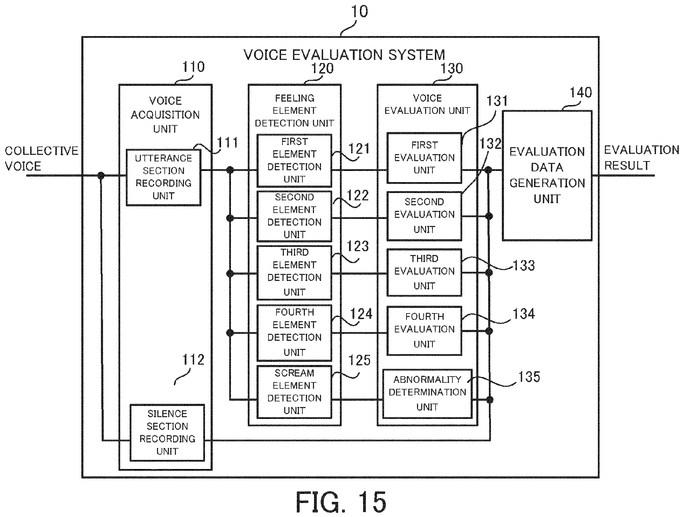

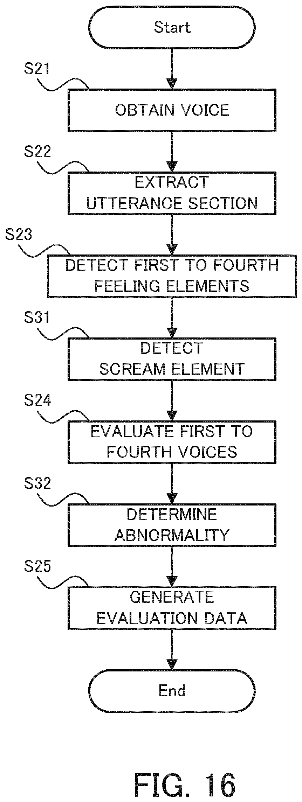

A voice evaluation system according to a sixth example embodiment will be described with reference to FIG. 15 and FIG. 16. The sixth example embodiment is partially different from the first to fifth example embodiments described above only in configuration and operation, and is generally the same in the other part. Therefore, the parts that differ from the first to fifth example embodiments will be described in detail below, and the other overlapping parts will not be described as appropriate.

### (System Configuration)

First, with reference to FIG. 15, a description will be given to an overall configuration of the voice evaluation system according to the sixth example embodiment. FIG. 15 is a block diagram illustrating the overall configuration of the voice evaluation system according to the sixth example embodiment. In FIG. 15, the same components as those illustrated in FIG. 1, FIG. 4, FIG. 6, and FIG. 8 carry the same reference numerals.

As illustrated in FIG. 15, in the voice evaluation system 10 according to the sixth example embodiment, the feeling element detection unit 120 includes a scream element detection unit 125 in addition to the components in the fourth example embodiment (see FIG. 6). Furthermore, the voice evaluation unit 130 includes an abnormality determination unit 135.

The scream element detection unit 125 is configured to detect a feeling element corresponding to a scream (hereinafter referred to as a "scream element" as appropriate) from the voice obtained by the voice acquisition unit 110. Here, the "scream" is a scream uttered from the group in occurrence of abnormality in a surrounding environment of the group (e.g., in natural disasters such as earthquakes), and is clearly differentiated, for example, from a scream similar to a shout of joy or a cheer. The differentiation between the scream in occurrence of abnormality and another scream can be realized, for example, by machine learning that uses a neural network. Information about the scream element detected by the scream element detection unit 125 is configured to be outputted to the abnormality determination unit 135.

The abnormality determination unit 135 is configured to determine whether or not abnormality has occurred in the surrounding environment of the group, on the basis of the scream element detected by the scream element detection unit 125. The abnormality determination unit 135 determines whether or not abnormality has occurred on the basis of the extent of the feeling corresponding to the scream obtained as an evaluation result using the scream element. For example, the abnormality determination unit 135 calculates a score of the feeling corresponding to the scream from the scream element, and when the score exceeds a predetermined threshold, the abnormality determination unit 135 may determine that abnormality has occurred, and when the score does not exceed the predetermined threshold, the abnormality determination unit 135 may determine that abnormality has not occurred.

### (Hardware Configuration)

A hardware configuration of the voice evaluation system 10 according to the sixth example embodiment may be the same as the hardware configuration of the voice evaluation system 10 according to the first example embodiment (see FIG. 2), and thus, a description thereof will be omitted.

### (Flow of Operation)

Next, with reference to FIG. 16, a description will be given to a flow of operation of the voice evaluation system 10 according to the sixth example embodiment. FIG. 16 is a flowchart illustrating the flow of the operation of the voice evaluation system according to the sixth example embodiment. In FIG. 16, the same steps as those in FIG. 5, FIG. 7, and FIG. 9 carry the same reference numerals.

As illustrated in FIG. 16, in operation of the voice evaluation system 10 according to the sixth example embodiment, first, the voice acquisition unit 110 obtains the collective voice (the step S21). The voice acquisition unit 110 extracts the voice of the section in which the group actually utters the voice, from the obtained voice (the step S22).

Subsequently, the feeling element detection unit 120 detects the feeling elements from the collective voice obtained by the voice acquisition unit 110 (the step S23). Specifically, the first element detection unit 121, the second element detection unit 122, the third element detection unit 123, and the fourth element detection unit 124 detect the respective feeling elements corresponding to different feelings. In addition, especially in the sixth example embodiment, the scream element detection unit 125 detects the scream element (step S31).

Subsequently, the voice evaluation unit 130 evaluates the collective voice on the basis of the feeling elements detected by the feeling element detection unit 120 (the step S24). Specifically, the first evaluation unit 131, the second evaluation unit 132, the third evaluation unit 133, and the fourth evaluation unit 134 evaluate the collective voice by using the respective different feeling elements. Furthermore, especially in the sixth example embodiment, the abnormality determination unit 135 determines whether or not abnormality has occurred in the surrounding environment of the group on the basis of the scream element detected by the scream element detection unit 125 (step S32)

Subsequently, the evaluation data generation unit 140 generates the evaluation data from the evaluation result of the collective voice (the step S25). Here, in particular, when it is determined in the abnormality determination unit 135 that abnormality has occurred, the evaluation data generation unit 140 generates the evaluation data including information about the abnormality (e.g., abnormality occurrence timing, etc.). Alternatively, the evaluation data generation unit 140 may generate abnormal notification data for notifying the occurrence of abnormality, separately from the normal evaluation data. In this case, the abnormality notification data may include, for example, data for controlling an operation of an alarm of an event venue.

### (Technical Effect)

Next, an example of a technical effect obtained by the voice evaluation system 10 according to the sixth example embodiment will be described.

As described in FIG. 15 and FIG. 16, in the voice evaluation system 10 according to the sixth example embodiment, it is determined whether or not abnormality has occurred on the basis the scream element. Therefore, according to the voice evaluation system 10 in the sixth example embodiment, it is possible not only to evaluate the feelings of the group from the voice, but also to detect the occurrence of abnormality in the surrounding environment of the group.

### <Seventh Example Embodiment>

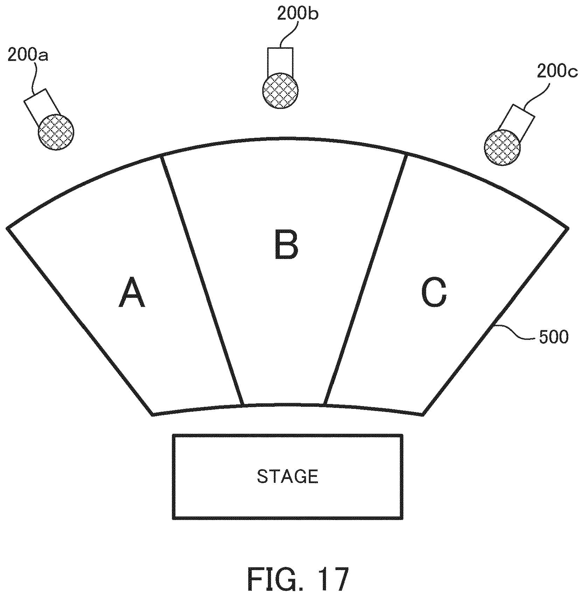

A voice evaluation system according to a seventh example embodiment will be described with reference to FIG. 17. The seventh example embodiment is partially different from the first to sixth example embodiments described above only in configuration and operation, and is generally the same in the other part. Therefore, the parts that differ from the first to sixth example embodiments will be described in detail below, and the other overlapping parts will not be described as appropriate.

### (System Configuration)

An overall configuration of the voice evaluation system 10 according to the seventh example embodiment may be the same as the overall configurations of the voice evaluation system 10 according to the first to sixth example embodiments (see FIG. 1, FIG. 4, FIG. 6, FIG. 8, and 15), and thus, a description thereof will be omitted.

### (Hardware Configuration)

A hardware configuration of the voice evaluation system 10 according to the seventh example embodiment may be the same as the hardware configuration of the voice evaluation system 10 according to the first example embodiment (see FIG. 2), and thus, a description thereof will be omitted.

### (Voice Evaluation in Each Area)

Next, with reference to FIG. 17, voice evaluation in each area that can be performed by the voice evaluation system 10 according to the seventh example embodiment will be described.

FIG. 17 is a conceptual diagram illustrating the voice evaluation in each area by the voice evaluation system according to the seventh example embodiment. In the following, a case of evaluating the voice uttered by a group that is the audience of a stage will be described as an example.

As illustrated in FIG. 17, in the voice evaluation system 10 according to the seventh example embodiment, the group is divided into a plurality of areas in advance. In the example illustrated, a stage 500 is divided into three areas: an area A, an area B, and an area C.

The voices uttered by respective groups in the area A, the area B, and the area C can be obtained as different voices. Specifically, the voice uttered by the group in the area A may be obtained by a microphone 200a. The voice uttered by the group in the area B may be obtained by a microphone 200b. The voice uttered by the group in the area C may be obtained by a microphone 200c. Each of the microphones 200a to 200c is configured as a part of the voice acquisition unit 110, and each voice in respective one of the areas A to C is obtained by the voice acquisition unit 110.

### (Flow of Operation)

In operation of the voice evaluation system 10 according to the seventh example embodiment, the same steps as those in the voice evaluation system 10 according to the first to sixth example embodiments (see FIG. 3, FIG. 5, FIG. 7, FIG. 9, and FIG. 16) are performed on each voice obtained from respective one of the areas (e.g., the area A, the area B, and the area C in FIG. 17). That is, the same process is performed in each area, and there is no change in the steps. For this reason, a specific flow of the operation steps will not be described.

### (Technical Effect)

Next, an example of a technical effect obtained by the voice evaluation system 10 according to the seventh example embodiment will be described.

As described in FIG. 17, in the voice evaluation system 10 according to the seventh example embodiment, the group is divided into a plurality of areas to obtain the collective voice, and the voice is evaluated in each area. As a result, the evaluation result of the voice (or the evaluation data) is obtained in each area. Therefore, according to the voice evaluation system 10 in the seventh example embodiment, it is possible to divide a group into a plurality of areas, and to evaluate the feelings of the group in each of the areas.

### <Supplementary Note>

The example embodiments described above may be further described as, but not limited to, the following Supplementary Notes.

### (Supplementary Note 1)

A voice evaluation system described in Supplementary Note 1 is a voice evaluation system including: an acquisition unit that obtains voice uttered by a group of a plurality of persons; a detection unit that detects an element corresponding to a feeling from the obtained voice; and an evaluation unit that evaluates the obtained voice on the basis of the detected element.

### (Supplementary Note 2)

A voice evaluation system described in Supplementary Note 2 is the voice evaluation system described in Supplementary Note 1, wherein the detection unit detects elements corresponding to a plurality of types of feelings from the obtained voice.

### (Supplementary Note 3)

A voice evaluation system described in Supplementary Note 3 is the voice evaluation system described in Supplementary Note 2, wherein the evaluation unit evaluates the obtained voice for each feeling, on the basis of the elements corresponding to the plurality of types of feelings.

### (Supplementary Note 4)

A voice evaluation system described in Supplementary Note 4 is the voice evaluation system described in any one of Supplementary Notes 1 to 3, wherein the evaluation unit generates evaluation data indicating an evaluation result of the obtained voice.

### (Supplementary Note 5)

A voice evaluation system described in Supplementary Note 5 is the voice evaluation system described in Supplementary Note 4, wherein the evaluation unit generates the evaluation data as time series data.

### (Supplementary Note 6)

A voice evaluation system described in Supplementary Note 6 is the voice evaluation system described in Supplementary Note 4 or 5, wherein the evaluation unit generates the evaluation data by graphically showing the evaluation result.

### (Supplementary Note 7)

A voice evaluation system described in Supplementary Note 7 is the voice evaluation system described in any one of Supplementary Notes 1 to 6, wherein the evaluation unit detects occurrence of abnormality in a surrounding environment of the group, from the evaluation result of the obtained voice.

### (Supplementary Note 8)

A voice evaluation system described in Supplementary Note 8 is the voice evaluation system described in any one of Supplementary Notes 1 to 7, wherein the acquisition unit obtains the voice uttered by the group by dividing the group into a plurality of area, and the evaluation unit evaluates the obtained voice in each of the areas.

### (Supplementary Note 9)

A voice evaluation method described in Supplementary Note 9 is A voice evaluation method including: obtaining voice uttered by a group of a plurality of persons; detecting an element corresponding to a feeling from the obtained voice; and evaluating the obtained voice on the basis of the detected element.

### (Supplementary Note 10)

A computer program described in Supplementary Note 10 is a computer program that operates a computer: to obtain voice uttered by a group of a plurality of persons; to detect an element corresponding to a feeling from the obtained voice; and to evaluate the obtained voice on the basis of the detected element.

This disclosure is not limited to the examples described above and is allowed to be changed, if desired, without departing from the essence or spirit of the invention which can be read from the claims and the entire specification. A voice evaluation system, a voice evaluation method, and a computer program with such modifications are also intended to be within the technical scope of this disclosure.

### Description of Reference Codes

10 Voice evaluation system
110 Voice acquisition unit
111 Utterance section recording unit
112 Silence section recording unit
120 Feeling element detection unit
121 First element detection unit
122 Second element detection unit
123 Third element detection unit
124 Fourth element detection unit
125 Scream element detection unit
130 Voice evaluation unit
131 First evaluation unit
132 Second evaluation unit
133 Third evaluation unit
134 Fourth evaluation unit
135 Abnormality determination unit
140 Evaluation data generation unit
200 Microphone
500 Audience seats

## Claims

1. A voice evaluation system comprising:
an acquisition unit that obtains voice uttered by a group of a plurality of persons;
a detection unit that detects an element corresponding to a feeling from the obtained voice; and
an evaluation unit that evaluates the obtained voice on the basis of the detected element.

2. The voice evaluation system according to claim 1, wherein the detection unit detects elements corresponding to a plurality of types of feelings from the obtained voice.

3. The voice evaluation system according to claim 2, wherein the evaluation unit evaluates the obtained voice for each feeling, on the basis of the elements corresponding to the plurality of types of feelings.

4. The voice evaluation system according to any one of claims 1 to 3, wherein the evaluation unit generates evaluation data indicating an evaluation result of the obtained voice.

5. The voice evaluation system according to claim 4, wherein the evaluation unit generates the evaluation data as time series data.

6. The voice evaluation system according to claim 4 or 5, wherein the evaluation unit generates the evaluation data by graphically showing the evaluation result.

7. The voice evaluation system according to any one of claims 1 to 6, wherein the evaluation unit detects occurrence of abnormality in a surrounding environment of the group, from the evaluation result of the obtained voice.

8. The voice evaluation system according to any one of claims 1 to 7, wherein
the acquisition unit obtains the voice uttered by the group by dividing the group into a plurality of area, and
the evaluation unit evaluates the obtained voice in each of the areas.

9. A voice evaluation method comprising:
obtaining voice uttered by a group of a plurality of persons;
detecting an element corresponding to a feeling from the obtained voice; and
evaluating the obtained voice on the basis of the detected element.

10. A computer program that operates a computer:
to obtain voice uttered by a group of a plurality of persons;
to detect an element corresponding to a feeling from the obtained voice; and
to evaluate the obtained voice on the basis of the detected element.
